# EUROPEAN PATENT SPECIFICATION

(11) **EP 3 372 860 B1**
(45) Date of publication and mention of the grant of the patent: **18.12.2019**
(21) Application number: 18159353.4
(22) Date of filing: 01.03.2018
(51) Int. Cl.: F16D 11/14, B21J 13/02, B21K 1/76

(54) **METHOD OF FORGING DOGS OF DOG CLUTCH AND DOGS OF DOG CLUTCH**
VERFAHREN ZUM SCHMIEDEN VON KLAUEN EINER KLAUENKUPPLUNG UND KLAUEN EINER KLAUENKUPPLUNG
PROCÉDÉ DE FORGEAGE DE GRIFFES D'EMBRAYAGE À GRIFFES ET EMBRAYAGE À GRIFFES

(30) Priority: 09.03.2017 JP 2017044970
(43) Date of publication of application: 12.09.2018
(73) Proprietor: Musashi Seimitsu Industry Co., Ltd., Aichi 441-8560 (JP)
(72) Inventor: SHIMIZU, Shuichi, Aichi 4418560 (JP); MAEDA, Kazuhiro, Aichi 4418560 (JP); YOSHIMURA, Mitsuhiko, Aichi 4418560 (JP)
(74) Representative: Gerbino, Angelo

(56) References cited:
- JP-A- H0 623 471
- JP-A- H0 679 395
- JP-A- S5 997 322
- JP-A- S56 138 523
- JP-A- S59 232 646
- JP-A- 2003 154 434
- JP-A- 2009 209 949

## Description

The present invention relates to dogs of a dog clutch, and a method of manufacturing the dogs.

### BACKGROUND OF THE INVENTION

Some types of transmissions have gears therein. A type of transmission in which the gears are always in mesh with each other is called a constant mesh gear transmission.

In constant mesh gear transmissions, the torque is transmitted by means of dog clutches. This type of constant mesh gear transmission is known, for example, as disclosed in Japanese Utility Model Application Laid-Open Publication No. 59-164859.

When both gears are approximated, the dogs projecting from one of the gears are engaged with the other gear, so that the torque is transmitted between the gears.

When both gears are separated, the dogs are disengaged, so that the torque transmission between both gears is disenabled.

The above-described dogs are usually shaped by forging. In forging, it is difficult to fill the corners of the die with the material. As a result, underfills likely occur at distal corners of the dogs. Such underfills result in decrease in the effective area of the torque transmission surfaces (the surfaces that engage with the other gear when the torque is transmitted), and in deterioration of durability of the dogs.

Accordingly, in order to obtain dogs with torque transmission surfaces having a sufficient effective area, an extremely large shaping load has been conventionally applied in forging for filling the corners of the die with the material. However, when forging is conducted with an extremely large shaping load, durability of the die is likely deteriorated.

Alternatively, underfills have been conventionally removed by cutting the distal surfaces of the dogs after forging. However, when cutting work is conducted, the processing cost is increased.

JP H06 23471 A discloses making the inner wall of a dog fitting hole an inversely inclined surface by driving in a V-shaped wedge blade between the dog fitting holes in the vertical direction to provide a notch and utilizing an action with which both sides of the notch are pushed aside.

JP S59 232 646 A discloses mass production of reverse tapered clutch pawls without requiring machining by forming preliminarily a blank material by die forging then upsetting the part od said material to form the clutch pawl thereby forming the material to the reverse tapered clutch pawl.

JP H06 79395 A discloses relieving the fiber flow of the steel from a tool for forming the reverse taper in executing pressure forming of a roughly formed claw part, to improve the forming precision of the reverse-tapered claw by facilitating the stable holding of the tool, and increase the service life of the tool.

JP S59 97322 A discloses preventing a clutch from spontaneously disengaging, by effecting forging to make a plurality of claw-making portions on a clutch material and by using jigs to swage-forge the claw-making portions to make their lateral sides convergent toward the body of the clutch material.

JP S56 138523 A discloses a method improving the strength of the dog type clutch and fully eliminating the material waste, wherein the moulding of the inversely slanted dogs of the dog type clutch mechanism is performed without interrupting the line of flow of the metallurgical structure of the material for the dogs, namely without cutting.

JP 2009 209949 A discloses a light weight dog clutch, securing rigidity of an engaging projection part.

Because of a demand for enhancing lifetime of the die and reducing the processing cost, a less expensive method of forging dogs is desired for shaping the dogs with torque transmission surfaces having a sufficient effective area without deteriorating durability of the die.

### SUMMARY OF THE INVENTION

An object of the present invention is to provide a less expensive method of forging dogs of a dog clutch for shaping the dogs with torque transmission surfaces having a sufficient effective area without deteriorating durability of the die. Another object of the present invention is to provide dogs of a dog clutch, with torque transmission surfaces having a sufficient effective area without deteriorating durability of the die.

According to one aspect of the present invention, there is provided a method of forging dogs of a dog clutch comprising: a dog-shaping process in which the dogs are shaped so that underfills remain at distal corners surrounding a distal surface (free end surface) of each of the dogs, and a recess is formed in the distal surface of each dog; and a finishing process in which the distal surfaces of the dogs are depressed, so that a material of the distal surface of each dog is caused to flow into the distal corners of each dog so as to fill the underfills of each dog with the material, wherein the dog-shaping process is carried out such that a mouth of the recess of each dog becomes circular and the mouth of the recess becomes smaller toward a bottom of the recess.

In accordance with the present invention, the dog-shaping process shapes the dogs such that underfills remain at distal corners of each of the dogs, and forms a recess in the distal surface of each dog. In the finishing process, when the distal surface of each dog is depressed, the material of the distal surface is distributed (forced) toward the underfills and the recess. By distributing the material, the material is caused to flow into the distal corners with a relatively small shaping load.

As a result, dogs with torque transmission surfaces having a sufficient effective area can be shaped without deteriorating durability of the die. In addition, since cutting work is not necessary, the dogs with torque transmission surfaces having a sufficient effective area can be shaped inexpensively

Preferably, the dog-shaping process is carried out such that an area of a mouth of the recess in the distal surface of each dog is formed within a range of 5 % to 30 % of an area of the distal surface.

Since the area of the mouth of the recess of each of the dogs is formed within a range of 5 % to 30 % of the area of the distal surface of each dog, dogs with torque transmission surfaces having a sufficient effective area can be obtained while restraining occurrence of shaping defect.

Since the mouth of the recess of each dog is circular, the filling density of the material can be uniform.

In addition, since the mouth of the recess becomes smaller toward the bottom thereof, it is possible to restrain deterioration of the strength of the dog.

Preferably, the finishing process is carried out to depress the distal surfaces such that the recesses remain in the distal surfaces.

Since the recesses remain in the dogs in the finishing process, the weight of the product can be reduced. As a result, the inertia mass of the product can be reduced, so that operability for gear shifting in the gear transmission incorporating the product can be improved.

Preferably, the dog-shaping process includes a pre-shaping process for shaping the dogs so that the underfills remain at the distal corners of each dog, and a recess-forming process for forming the recess in the distal surface of each dog.

Since the dog-shaping process includes a pre-shaping process for shaping the dogs so that the underfills remain at the distal corners of each dog, and a recess-forming process for forming the recess in the distal surface of each dog, the dies for the respective processes can be simplified.

According to a second aspect of the present invention, there are provided dogs of a dog clutch comprising recesses formed in distal surfaces (free end surfaces) of the dogs, wherein the recess is a depression having a circular mouth, and the mouth becomes smaller toward a bottom of the depression.

In accordance with the present invention, since the recesses are provided in the distal surfaces of the dogs, the weight of the product can be reduced. As a result, the inertia mass of the product can be reduced, so that operability for gear shifting in the gear transmission incorporating the product can be improved.

In the present invention, since the recesses are provided in the distal surfaces of the dogs, the material of the distal surface of each dog is caused to flow (move) toward the underfills and the recess of each dog upon depressing the distal surfaces of the dogs to shape the dogs. Accordingly, the material can flow into the distal corners with a relatively small shaping load.

As a result, dogs with torque transmission surfaces having a sufficient effective area can be obtained without deteriorating durability of the die. In addition, since cutting work is not necessary, the dogs with torque transmission surfaces having a sufficient effective area can be obtained inexpensively.

Preferably, an area of a mouth of the recess in the distal surface of each dog falls within a range of 5 % to 30 % of an area of the distal surface.

Since the area of the mouth of the recess in the distal surface of each dog falls within the range of 5 % to 30 % of an area of the distal surface, the area of the distal surface is not extremely reduced. Thus, it is possible to prevent the surface pressure from excessively rising when the distal surfaces of the dogs are in contact with another gear. Furthermore, formability can be improved.

Since the mouth of the recess of each dog is circular, it is possible to prevent the recess from being broken. In addition, since the mouth becomes smaller toward a bottom of the depression, the strength of the dog can be ensured.

### BRIEF DESCRIPTION OF THE DRAWINGS

Some exemplary embodiments of the present invention will be described in detail with reference to the appended drawings, in which:
Fig. 1 is a perspective view of a dog clutch according to one embodiment of the present invention;
Fig. 2 is a perspective view of a dog;
Fig. 3A is a perspective view of a material;
Fig. 3B is a front view of an interim product obtained by a dog-shaping process;
Fig. 3C is a front view of the interim product that has been subjected to a finishing process;
Fig. 4A is a cross-sectional view of a forging die;
Fig. 4B is a cross-sectional view of a dog;
Fig. 4C is a view taken along the arrow C in Fig. 4B;
Fig. 5A is a view useful to describe the finishing process;
Fig. 5B is a cross-sectional view of a dog that has been subjected to the finishing process;
Fig. 6A is a perspective view of a material according to a modified embodiment;
Fig. 6B is a front view of a first interim product obtained by a pre-shaping process;
Fig. 6C is a front view of a second interim product obtained by a recess-forming process; and
Fig. 6D is a front view of dogs that have been subjected to the finishing process.

### DETAILED DESCRIPTION OF THE PREFERRED EMBODIMENTS

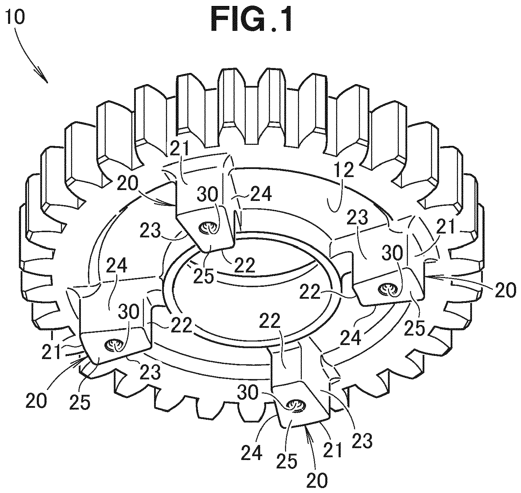

As shown in Fig. 1, a gear 10 includes dog-clutch dogs 20 (hereinafter, simply referred to as "dogs 20") integrally at the side surface 12 thereof. Such a gear 10 is used, for example, in a constant mesh gear transmission.

Each of the dogs 20 has four wall surfaces 21 to 24 and a distal surface (front face) 25.

The four wall surfaces 21 to 24 are an outer wall surface 21, an inner wall surface 22, and a pair of side wall surfaces 23 and 24.

The distal surface 25 is a surface abutting on the distal ends of the wall surfaces 21 to 24, and is parallel to (including substantially parallel to) the side surface 12 of the gear 10.

A pair of wall surfaces 23 and 24 among the four wall surfaces are surfaces that engage with another gear when torque is transmitted, that is to say, so-called torque transmission surfaces.

The shape of the distal surface 25 of the dog 20 is not limited to a quadrangle or a trapezoid, and may be a circle. If the distal surface 25 has a circular shape, the wall surface is a cylindrical surface, and part of the cylindrical surface is a torque transmission surface.

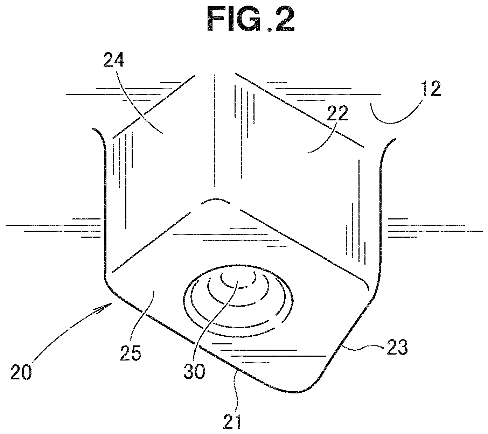

As shown in Fig. 2, a recess 30 is formed integrally in the distal surface 25 of each of the dogs 20. The mouth of the recess 30 is a precise circle.

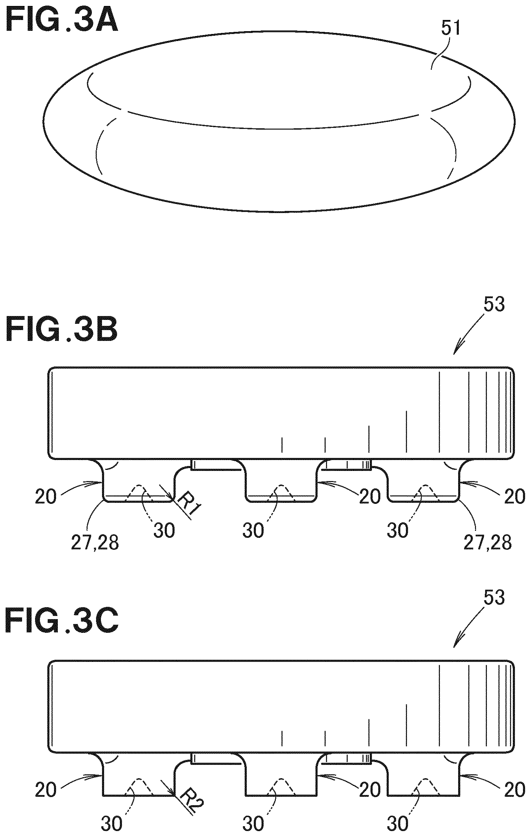

With reference to Figs. 3A to 3C, 4A to 4C, and 5A to 5B, a method of manufacturing the dogs 20 with the above-described structure will be described.

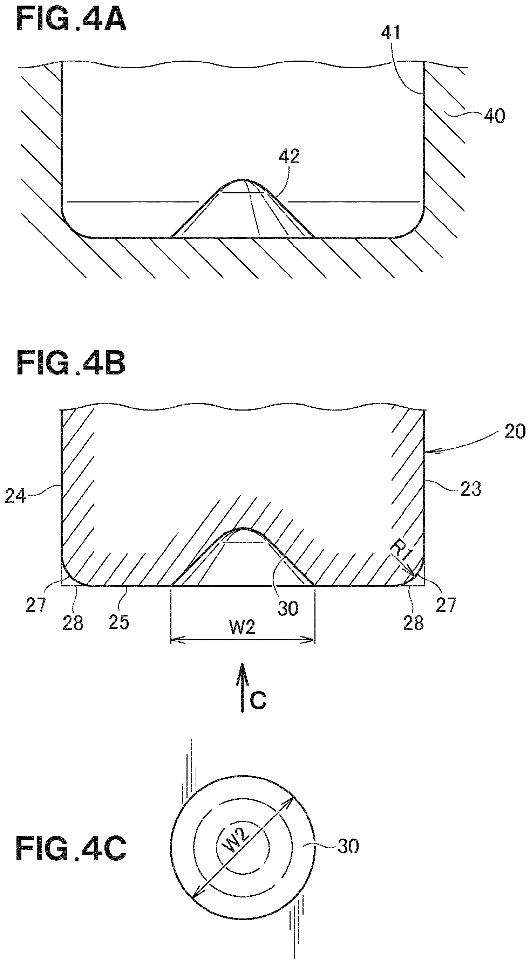

As shown in Fig. 3A, a predetermined volume of a forging material 51 is prepared. The form of the forging material 51 is arbitrary. A dog-shaping process to which the forging material 51 is subjected will be described with reference to Figs. 4A to 4C.

As shown in Fig. 4A, a forging die 40 is prepared. This forging die 40 has dog-forming sections 41 each having a bottom provided with a convex portion 42 having a generally circular frustum shape. The convex portion 42 having a generally circular frustum shape has a configuration in which a hemispherical top is connected to a circular frustum. In other words, the convex portion 42 has a precise circular bottom, and has a decreasing cross-sectional area toward its top.

The forging material 51 is subjected to forging with the use of the forging die 40. As a result, a dog 20 is obtained as shown in Fig. 4B. The distal corners 27 are edges of the distal surface 25 of the dog 20. The distal corners 27 are round when viewed in a cross-sectional view. The radius of each distal corner 27 is R1. On the outside of the distal corners 27, underfills 28 of which the cross-sectional shape is generally triangular exist.

If the radius R1 is large, forging is easy, and the load on the forging die 40 is reduced. On the other hand, the smaller the radius R1, the more forging pressure is needed, and the more strength is needed for the forging die 40. Accordingly, the radius R1 is appropriately determined in light of economic efficiency and the like. R1 is, for example, 0.5 mm.

Fig. 4C is a view taken along the arrow C in Fig. 4B.

As shown in Fig. 4C, the mouth of the recess 30 is a precise circle having a diameter of W2. The mouth of the recess 30 becomes smaller toward the back of the drawing. In other words, the recess has a decreasing area toward the bottom of the recess 30.

The dog-shaping process described with reference to Figs. 4A to 4C is applied to the forging material 51 shown in Fig. 3A, so that the interim product 53 shown in Fig. 3B is obtained.

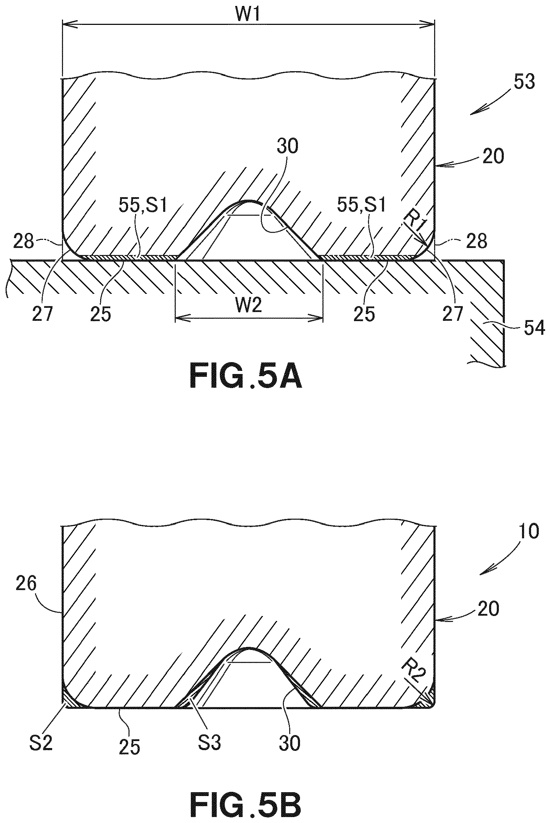

The interim product 53 is subjected to a finishing process. The finishing process will be described with reference to Figs. 5A to 5B.

As shown in Fig. 5A, on the outside of distal corners 27 of the dog 20 in the interim product 53, underfills 28 of which the cross-sectional shape is generally triangular remain. A punch 54 is brought into contact with the distal surface 25 of the dog 20. The shaded section 55 in the drawing is depressed by the punch 54. The area of the shaded section 55 is S1.

When the distal surface 25 is depressed by the punch 54, the material on the distal surface 25 (the shaded section 55) is distributed toward the underfills 28 and the recess 30.

On the final stage of the finishing process, as shown in Fig. 5B, the material corresponding to the sectional area S2 flows from the distal surface 25 into the distal corners 27, whereas the material corresponding to the sectional area S3 flows from the distal surface 25 into the recess 30. In general, the sum of the sectional area S2 and the sectional area S3 corresponds to the sectional area S1. The radius of the distal corners 27 changes from R1 to R2. R2 is smaller than R1. Due to the addition of the material, the radius R2 is a fraction of R1. For example, the radius changes from 0.5 mm to about 0.1 mm. The recess 30 remains although the shape of the mouth slightly changes.

The finishing process described with reference to Figs. 5A to 5B is applied to the interim product 53 shown in Fig. 3B, so that the dog 20 shown in Fig. 3C is obtained.

When the finishing process is applied to the interim product 53, relative dimensions (sizes) in the recess 30 shown in Fig. 5A are important.
As a result of test productions by the inventors, it was ascertained that the diameter W2 of the mouth of the recess 30 is preferable with respect to the width W1 of the dog 20 when the diameter W2 falls within a range of 25 % to 55 % of W1.

When a pressing load is applied to the shaded section 55 and the diameter W2 of the mouth is in excess of 55 % of Wl, the length of the shaded section 55 (the length of the shaded section 55 in contact with the punch 54) is small. Thus, the volume of the flowing material is excessive when the shaded section 55 is depressed with the pressing load. As a result, it is difficult to control the volume of the flowing material.

When a pressing load is applied to the shaded section 55 and the diameter W2 of the mouth is less than 25 % of Wl, then the shaded section 55 becomes longer. Thus, the volume of the flowing material is insufficient when the shaded section 55 is depressed.

Accordingly, the diameter W2 of the mouth of the recess 30 is within a range of 25 % to 55 % of the width W1 of the dog 20. When an error and the like are taken into consideration, it is more preferable that the diameter W2 of the mouth of the recess 30 be within a range of 30 % to 40 % of the width W1 of the dog 20.

W2/W1 is a length ratio. This will be converted into an area ratio.

If the distal surface 25 of the dog 20 is circular, the area corresponds to the square of the diameter.

If W2/W1 = 25 %, the area ratio is calculated in such a manner that (the area of the mouth of the recess 30)/(the area of the distal surface 25) = 0.25² = 6.3 %.

If W2/W1 = 30 %, the area ratio is calculated in such a manner that (the area of the mouth of the recess 30)/(the area of the distal surface 25) = 9 %. If W2/W1 = 40 %, the area ratio is calculated in such a manner that (the area of the mouth of the recess 30)/(the area of the distal surface 25) = 16 %. If W2/W1 = 55 %, the area ratio is calculated in such a manner that (the area of the mouth of the recess 30)/(the area of the distal surface 25) = 30 %. If the distal surface 25 of the dog 20 is square, the area of the mouth of the recess 30 is (π/4) x W2², and the area of the distal surface 25 is W1². Then, (the area of the mouth of the recess 30)/(the area of the distal surface 25) is equal to (π/4) x (W2/W1)².

If W2/W1 = 25 %, the area ratio is calculated in such a manner that (the area of the mouth of the recess 30)/(the area of the distal surface 25) = (π/4) x 0.25² = 5 %. Similarly, if W2/W1 = 30 %, the area ratio is 7 %. If W2/W1 = 40 %, the area ratio is 13 %. If W2/W1 = 55 %, the area ratio is 24 %.

Since the shape of the distal surface 25 is not limited to a particular shape, it is considered that the area of the mouth of the recess 30 in the distal surface 25 falls within a range of 5 % to 30 % of the area of the distal surface 25.

As described with reference to Fig. 4C, the mouth of the recess 30 is preferably circular. If the mouth of the recess 30 is polygonal, the vertices of the polygon are inflection points. When the material flows, the flow will be irregular in the vicinity of the inflection points. Thus, there become portions having a large filling density and a small filling density.

The undesirable variation of filling density of the material affects the finishing accuracy of not only the recess 30 but also the distal corners 27.

With this respect, if the mouth of the recess 30 is circular, the filling density of the material can be uniform. It should be noted that if the mouth of the recess 30 is oval, occurrence of the undesirable variation of filling density of the material can be restricted, but it is more preferable that the mouth of the recess 30 be a precise circle as in this embodiment.

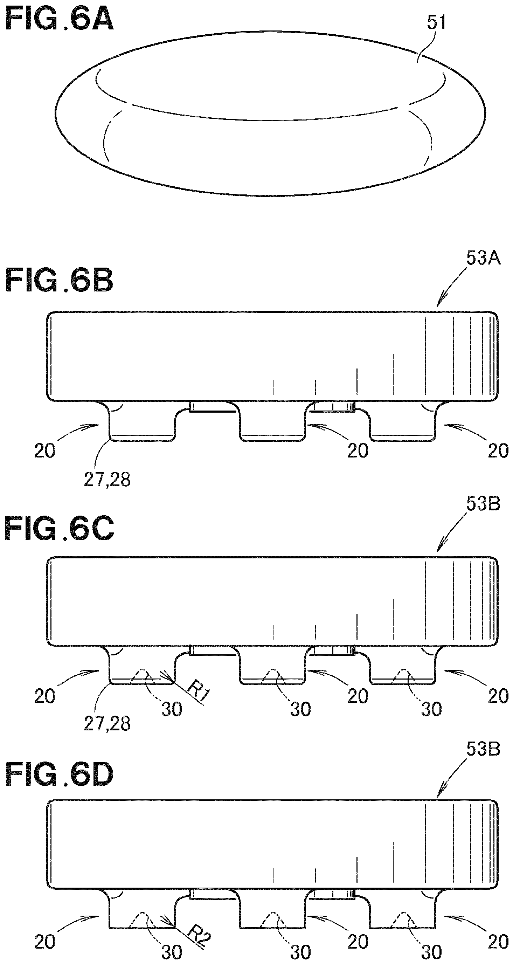

In the dog-shaping process described with reference to Figs. 4A to 4B, forming of the dog 20 is conducted simultaneously with forming of the recess 30. It should be noted, however, that it is possible to form the dog 20 and the recess 30 separately. An example of separately forming the dog 20 and the recess 30 will be described with reference to Figs. 6B to 6C.

The forging material 51 shown in Fig. 6A is subjected to pre-shaping, so that the first interim product 53A shown in Fig. 6B is obtained. The recesses 30 are not yet formed in the dogs 20 of the first interim product 53A.

The first interim product 53A shown in Fig. 6B is subjected to a recess-forming process, in which the recesses 30 are formed in the dogs 20. Then, the second interim product 53B shown in Fig. 6C is subjected to the finishing process.

Teeth are formed on the outer periphery of the interim product 53 or the second interim product 53B that has been subjected to the finishing process, so that the gear 10 shown in Fig. 1 is obtained. Since the dogs 20 have the recesses 30 in the distal surfaces 25, it is possible to reduce the weight of the gear 10. As a result, the inertia mass of the gear 10 can be reduced, so that operability for gear shifting in the gear transmission incorporating the gear 10 can be improved.

In the dog-shaping process (or the pre-shaping process), the dogs 20 are upraised in such a manner that the underfills 28 remain at the distal corners 27 of the dogs 20. Accordingly, even if the shaping load is relatively small, the dogs 20 can be upraised, so that the durability of the die is not deteriorated.

If the torque transmission surfaces 23 and 24 are in point or line contact with the other gear, breakage or abrasion is caused. Accordingly, plain surfaces should be ensured for the torque transmission surfaces.

In the embodiments of the present invention, the distal surface 25 of each dog has the recess 30. In the finishing process, when the distal surface 25 of each of the dogs 20 is depressed, there are no worries of bulging of the torque transmission surfaces 23 and 24 in the lateral directions of each dog 20 due to the existence of the recess 30. Since the torque transmission surfaces 23 and 24 of each dog 20 do not bulge in the lateral directions, the torque transmission surfaces 23 and 24 are ensured to be plain surfaces.

## Claims

1. A method of forging dogs (20) of a dog clutch, the method comprising:
a dog-shaping process in which the dogs (20) are shaped so that underfills (28) remain at distal corners (27) surrounding a distal surface (25) of each of the dogs (20), and
a finishing process in which the distal surfaces (25) of the dogs (20) are depressed, so that a material of the distal surface (25) of each said dog (20) is caused to flow into the distal corners (27) of each said dog (20) so as to fill the underfills (28) of each said dog (20) with the material,
**characterised in that**, a recess (30) is formed in the distal surface (25) of said each dog (20), and the dog-shaping process is carried out such that a mouth of the recess (30) of each said dog (20) becomes circular and the mouth of the recess (30) becomes smaller toward a bottom of the recess (30).

2. The method of forging dogs (20) of a dog clutch according to claim 1, wherein the dog-shaping process is carried out such that an area of a mouth of the recess (30) in the distal surface (25) of each said dog (20) is formed within a range of 5 % to 30 % of an area of the distal surface (25).

3. The method of forging dogs (20) of a dog clutch according to claim 1 to 2, wherein the finishing process is carried out to depress the distal surfaces (25) such that the recesses (30) remain in the distal surfaces (25).

4. The method of forging dogs (20) of a dog clutch according to claim 1 to 3, wherein the dog-shaping process includes:
a pre-shaping process for shaping the dogs (20) so that the underfills (28) remain at the distal corners (27) of each said dog (20), and
a recess-forming process for forming the recess (30) in the distal surface (25) of each said dog (20).

5. Dogs (20) of a dog clutch, comprising recesses (30) formed in distal surfaces (25) of the dogs (20), **characterised in that**, the recess (30) is a depression having a circular mouth, and the mouth becomes smaller toward a bottom of the depression.

6. The dogs (20) of a dog clutch according to claim 5, wherein an area of a mouth of the recess (30) in the distal surface (25) of each said dog (20) falls within a range of 5 % to 30 % of an area of the distal surface (25).

## Patentansprüche

1. Verfahren zum Schmieden von Klauen (20) einer Klauenkupplung, mit:
einem Klauenformungsprozess, in dem die Klauen (20) so geformt werden, dass Unterfüllungen (28) an distalen Ecken (27), die eine distale Oberfläche (25) jeder der Klauen (20) umgeben, verbleiben, und
einem Fertigstellungsprozess, in dem die distalen Oberflächen (25) der Klauen (20) abgesenkt werden, so dass bewirkt wird, dass ein Material der distalen Oberfläche (25) jeder besagten Klaue (20) in die distalen Ecken (27) jeder besagten Klaue (20) fließt, so dass die Unterfüllungen (28) jeder besagten Klaue (20) mit dem Material gefüllt werden,
**dadurch gekennzeichnet, dass** eine Vertiefung (30) in der distalen Oberfläche (25) besagter jeder Klaue (20) ausgebildet wird, und
der Klauenformungsprozess derart ausgeführt wird, dass eine Öffnung der Vertiefung (30) jeder besagten Klaue (20) kreisförmig wird und die Öffnung der Vertiefung (30) in Richtung eines Bodens der Vertiefung (30) kleiner wird.

2. Verfahren zum Schmieden von Klauen (20) einer Klauenkupplung nach Anspruch 1, bei dem der Klauenformungsprozess derart ausgeführt wird, dass eine Fläche einer Öffnung der Vertiefung (30) in der distalen Oberfläche (25) jeder besagten Klaue (20) innerhalb eines Bereichs von 5 % bis 30 % einer Fläche der distalen Oberfläche (25) ausgebildet wird.

3. Verfahren zum Schmieden von Klauen (20) einer Klauenkupplung nach Anspruch 1 bis 2, bei dem der Fertigstellungsprozess zum Absenken der distalen Oberflächen (25) derart ausgeführt wird, dass die Vertiefungen (30) in den distalen Oberflächen (25) verbleiben.

4. Verfahren zum Schmieden von Klauen (20) einer Klauenkupplung nach Anspruch 1 bis 3, bei dem der Klauenformungsprozess aufweist:
einen Vorformungsprozess zum Formen der Klauen (20), so dass die Unterfüllungen (28) an den distalen Ecken (27) jeder besagten Klaue (20) verbleiben, und
einen Vertiefungsausbildungsprozess zum Ausbilden der Vertiefung (30) in der distalen Oberfläche (25) jeder besagten Klaue (20).

5. Klauen (20) einer Klauenkupplung, mit Vertiefungen (30), die in distalen Oberflächen (25) der Klauen (20) ausgebildet sind, **dadurch gekennzeichnet, dass** die Vertiefung (30) eine Absenkung mit einer kreisförmigen Öffnung ist, und die Öffnung in Richtung eines Bodens der Absenkung kleiner wird.

6. Klauen (20) einer Klauenkupplung nach Anspruch 5, bei denen eine Fläche einer Öffnung der Vertiefung (30) in der distalen Oberfläche (25) jeder besagten Klaue (20) in einen Bereich von 5 % bis 30 % einer Fläche der distalen Oberfläche (25) fällt.

## Revendications

1. Procédé de forgeage de griffes (20) d'un embrayage à griffes, le procédé comprenant :
un processus de façonnage de griffes dans lequel les griffes (20) sont façonnées de sorte que des manques de métal (28) subsistent au niveau de coins distaux (27) entourant une surface distale (25) de chacune des griffes (20), et
un processus de finition dans lequel les surfaces distales (25) des griffes (20) sont enfoncées, de sorte qu'un matériau de la surface distale (25) de chaque dite griffe (20) est amené à s'écouler dans les coins distaux (27) de chaque dite griffe (20) de façon à remplir de matériau les manques de métal (28) de chaque dite griffe (20),
**caractérisé en ce qu'**un évidement (30) est formé dans la surface distale (25) de chaque dite griffe (20), et
le processus de façonnage des griffes est réalisé de sorte qu'une embouchure de l'évidement (30) de chaque dite griffe (20) devienne circulaire et que l'embouchure de l'évidement (30) devienne plus petite vers un fond de l'évidement (30).

2. Procédé de forgeage de griffes (20) d'un embrayage à griffes selon la revendication 1, dans lequel le processus de façonnage de griffes est réalisé de sorte qu'une aire d'une embouchure de l'évidement (30) dans la surface distale (25) de chaque dite griffe (20) soit formée au sein d'une plage de 5 % à 30 % d'une aire de la surface distale (25).

3. Procédé de forgeage de griffes (20) d'un embrayage à griffes selon la revendication 1 ou 2, dans lequel le processus de finition est réalisé pour enfoncer les surfaces distales (25) de sorte que les évidements (30) restent dans les surfaces distales (25).

4. Procédé de forgeage de griffes (20) d'un embrayage à griffes selon les revendications 1 à 3, dans lequel le processus de façonnage de griffes comporte :
un processus de préfaçonnage pour façonner les griffes (20) de sorte que les manques de métal (28) subsistent au niveau des coins distaux (27) de chaque dite griffe (20), et
un processus de formation d'évidement pour former l'évidement (30) dans la surface distale (25) de chaque dite griffe (20).

5. Griffes (20) d'un embrayage à griffes, comprenant des évidements (30) formés dans des surfaces distales (25) des griffes (20), **caractérisées en ce que** l'évidement (30) est un enfoncement ayant une embouchure circulaire, et **en ce que** l'embouchure devient plus petite vers un fond de l'enfoncement.

6. Griffes (20) d'un embrayage à griffes selon la revendication 5, dans lesquelles une aire d'une embouchure de l'évidement (30) dans la surface distale (25) de chaque dite griffe (20) s'inscrit dans une plage de 5 % à 30 % d'une aire de la surface distale (25).
